# EUROPEAN PATENT APPLICATION

(11) **EP 2 810 743 A1**
(43) Date of publication of application: **10.12.2014**
(21) Application number: 13743523.6
(22) Date of filing: 30.01.2013
(51) Int. Cl.: B25D 1/02

(54) **MULTIFUNCTIONAL TOOL INCLUDING INTERCHANGEABLE TIPS**

(30) Priority: 31.01.2012 ES 201200103
(71) Applicant: Bocanegra Marquina, Isidro, 09006 Burgos (ES); Bocanegra García, Daniel, 09193 Cardeñajimeno - Burgos (ES); Bocanegra García, Jorge, 09007 Burgos (ES)
(72) Inventor: Bocanegra Marquina, Isidro, 09006 Burgos (ES); Bocanegra García, Daniel, 09193 Cardeñajimeno - Burgos (ES); Bocanegra García, Jorge, 09007 Burgos (ES)
(74) Representative: ABG Patentes, S.L.
(86) International application number: PCT/ES2013/070044
(87) International publication number: WO 2013/113964

(57) **Abstract**

The invention relates to a multifunctional tool with interchangeable tips comprising a handle (10), a cover (20), at least one interchangeable tip (30) and at least one removable securing means (40). The interchangeable tip (30) is clamped at various points between the cover (20) and the handle (10) because the cavities (23 and 13) of the handle (10) and of the cover (20) are not surfaces of revolution, whereas the diametrical recess (33) of the interchangeable tip (30) is a surface of revolution. The teeth (11) of the handle (10) engage the teeth (21) of the cover (20), the parallel faces (12 and 22) of said teeth (11 and 21) meshing axially with respect to the tips (30) preventing the cover (20) from sliding off the handle (10). At least one removable securing means (40) firmly secures the interchangeable tips (30) and the cover (20) to the handle (10).

## Description

### Technical Field of the Invention

The present invention is comprised in the technical field of hand tools, more specifically it relates to hand tools with interchangeable tips. The multifunctional tool can therefore be used for various purposes, depending on the tip used.

### State of the Art

Different types of hand tools such as for example hammers, sticks, farming and gardening tools, etc., have been around for ages. These tools have been improved over the years and their uses have spread to a large number of applications. Over the years, and for the purpose of preventing use of a large number of hand tools, different types of systems that allow interchanging the work tip have been developed, therefore using a single tool for a wide range of uses. The main problem with interchangeable tip systems is to firmly secure the interchangeable tips for the purpose of making the tool safe for working. There are different types of interchangeable systems, and among them the following can be highlighted:
US1078585; D.D. Keltnet, "Pick"- this patent relates to a pick comprising a head split in two parts. The lower part of the head presents a socket where the detachable handle is inserted. The lateral ends of the lower and upper parts of the head present a planar recess where the interchangeable tip is arranged. The interchangeable tip is inserted between the recesses of the lower part and of the upper part of the head. The upper part of the head presents a planar groove coinciding with the planar groove of the interchangeable tip. The upper part of the head is secured to the lower part of the head by means of a screw. The handle is detachable and is coupled to the lower part of the head.
US 1447732; C.F. Schroeder et al.*,* "Hammer" - this patent relates to a head split in two parts: an upper part and a lower part. The upper and lower parts of the head present longitudinal and transverse cavities. The detachable handle is inserted in some cavities, and the interchangeable tips are inserted in the other cavities.

The upper part of the head is secured to the lower part of the head by means of a screw.

US 1532135; W. H. Gibbs; "Sectional hammer" - this patent relates to a head split in two parts. The parts of the head present longitudinal and transverse cavities. The interchangeable tips are inserted in some cavities, and the detachable handle is inserted in the other cavity, this cavity having a type of groove and the handle having a type of lip, thereby preventing the handle from coming out. The parts of the head are secured by means of a screw.

UK575211; Walter Runciman Stephens, "Improvements relating to hand hammers" - the patent relates to a head split in two parts. The parts of the head present longitudinal and transverse cavities. The detachable handle is inserted in some cavities, said handle being gripped by the two parts of the head, and the interchangeable tips are inserted in the other cavities. The parts of the head are secured by means of a series of screws.

US2462959; P.C. Hardy, "Hammer" - this patent relates to a head split in two parts: an upper part and a lower part. The upper and lower parts of the head present cavities. The interchangeable tips are inserted in some cavities, and the detachable handle is inserted in the other cavity. The upper and lower parts of the head engage one another. The upper and lower parts of the head are attached to one another by means of a screw. The handle is detachable and is inserted in the lower part of the head.

US2653060; L. Rubenstein, "Tool handle connection" - this patent relates to a head adapted to receive several types of tips. The head is secured to the handle by means of a type of conical nut. The handle is detachable. The handle presents a threaded end where the head with a conical hole is inserted. The head presents channels and holes transverse to the conical hole. The tips present channels engaging the channels of the head, and the tips further present cylindrical projections that are inserted in the transverse holes of the head; the cylindrical projections present a recess or channel. A type of conical-shaped nut is inserted in the head, and the nut presents grooves engaging the recesses of the cylindrical projections of the tips. The handle is screwed into the nut, securing the interchangeable tips.

US3186456; C.O. Glasgow, "Industrial hammer" - this patent relates to a head split in two parts. The parts of the head present cavities. The detachable handle is inserted in one of these cavities, and the interchangeable tips are inserted in the other cavities. The parts of the head are secured by means of a screw.

UK2319000; Michael Gregory, "Hammer with Split head" - this patent relates to a head split in two parts. When these two parts are attached to one another, they present transverse and longitudinal cavities. The detachable handle is inserted in one of these cavities, and the interchangeable tips are inserted in the other cavities. The handle is detachable with respect to these parts and is coupled to the head once the two parts of the head are attached. On one of the ends of the handle there is a plane to prevent rotation thereof with respect to the head. These parts are secured by means of a screw going through the handle.

The purpose of the different innovations developed over the years is to obtain a tool in which the interchangeable tip is firmly secured. Although these systems have improved with respect to their predecessors, it should be pointed out that the main problem in these systems is still safety. It can therefore be seen with systems existing up until now that with use, one runs the risk of the interchangeable tip coming loose or becoming detached from the handle, and this is because as the interchangeable tip is hit or worked on, it becomes loose with use.

### Brief Description of the Invention

The present invention relates to a multifunctional tool with interchangeable tips providing greater user safety because the interchangeable tips are more firmly secured to the handle and to the cover. The multifunctional tool comprises: a handle, a cover, at least one interchangeable tip, and at least one removable securing means; these elements are characterized in that:
- The handle and cover comprise:
   - A plurality of teeth engaging one another by way of tongue and grooving such that the cover engages the handle. The teeth of the cover and of the handle present at least two faces parallel to one another such that the teeth of the cover mesh with the teeth of the handle axially with respect to the axis of interchangeable tips.
   - At least one cavity in the handle and at least one cavity in the cover.
   These cavities are surfaces whose form is not of revolution. Furthermore, when the cover engages the handle, at least one cavity of the cover is aligned with at least one cavity of the handle. One or several interchangeable tips are inserted between these cavities of the cover and of the handle.
- One or several interchangeable tips comprise:
   - At least one knocking head or work surface.
   - A diametrical recess inserted between the cavities of the handle and of the cover; this diametrical recess is of revolution.

Therefore, at least one removable securing means secures the cover to the handle and/or vice versa; the diametrical recess of one or several interchangeable tips is therefore clamped at various points or surfaces of contact between the cavities of the handle and of the cover. The cover and the handle thus securely clamp at least one interchangeable tip.

One of the advantages of the invention is that once the cover is secured to the handle by means of at least one removable securing means, the interchangeable tip being clamped between the cover and the handle at various points or surfaces of contact. A firmer and safer securing of the interchangeable tip is thus obtained, thereby reducing the risk of the interchangeable tip coming off. One or several interchangeable tips are clamped between the cover and the handle at various points or surfaces of contact because:
- The cavities of the handle and of the cover are surfaces whose forms are not of revolution; and
- The diametrical recess of the interchangeable tip is a surface of revolution.

The cavities of the handle and of the cover can present:
- a threaded surface;
- a surface with at least one groove; or
- a surface with at least one cavity.

The diametrical recess of the interchangeable tip can present:
- at least one thread of revolution;
- at least one grooving or groove of revolution; or
- a geometry of revolution.

The diametrical recess of the interchangeable tip is therefore complementary to the cavities of the handle and of the cover, such that the diametrical recess of the interchangeable tip is inserted between the cavities of the handle and of the cover.

Another advantage of the invention is that the plurality of teeth of the cover meshes with the plurality of teeth of the handle axially with respect to the interchangeable tips. The plurality of teeth makes the multifunctional tool with interchangeable tips more rigid and safer because the teeth distribute the force of impacts or blows through each tooth. Furthermore, this plurality of teeth prevents the cover from sliding off or being disengaged from the handle, making it more rigid and more difficult for the interchangeable tips from loosening or coming off. This plurality of teeth of the cover and of the handle presents:
- at least two faces parallel to one another such that the plurality of teeth of the cover meshes with the plurality of teeth of the handle axially with respect to the interchangeable tips;
- at least two faces parallel to the axial direction of one or more removable securing means.

To assure that the interchangeable tip is clamped at various points or surfaces of contact between the cover and the handle, and once the cover is secured to the handle by means of at least one removable securing means, the cover does not make contact with the handle.

The cover and the handle are secured by means of any type of releasable securing; to that end one or several removable securing means is used.

Furthermore, the cavities of the handle and of the cover can present a mortise. One of the advantages of this mortise is that it can be used as a guide for inserting the interchangeable tip; this mortise can furthermore facilitate making the diametrical recess of the interchangeable tip.

Furthermore, the handle and/or cover can present at least one rib or reinforcement. One of the advantages of the rib is that it can make the multifunctional tool with interchangeable tips more rigid.

Furthermore, the interchangeable tips, the handle and/or the cover can present at least one positioner. One of the advantages of the positioner is that it allows positioning the interchangeable tip with respect to the handle.

The handle can further present a grip or a geometry such that it is easier, more practical or more ergonomic to grip the multifunctional tool with interchangeable tips.

For the purpose of improving safety of the multifunctional tool, the handle is integral, i.e., made in one-piece, whereby preventing the problem of the handle coming out unless said handle breaks. This makes the multifunctional tool with interchangeable tips even safer, and it therefore makes it safer for the end user.

The interchangeable tip can be made from any material or combination of materials suitable for the different applications or uses of the multifunctional tool with interchangeable tips. Furthermore, the knocking head or work surface can present any shape for being able to perform different jobs.

The handle and the cover can be made from any material that is rigid and durable enough so as to not easily break or crack.

The arrangement of the cover with respect to the handle can be vertical, lateral or any other type of arrangement allowing correct assembly and securing.

The multifunctional tool with interchangeable tips, and depending on the interchangeable tip used, can be used as: hammer, stick, axe, pickaxe, mallet, hoe, Dutch-hoe, mattock, gardening tool, masonry tool, and/or any hand tool that can be used for hitting, extracting nails, cutting, chipping, chiseling, scratching, scraping or digging.

The multifunctional tool with interchangeable tips presents a series of advantages, such as:
- The interchangeable tips are firmly secured to the handle and to the cover, and the cover furthermore being firmly secured to the handle, making the multifunctional tool with interchangeable tips safer.
- The interchangeable tips can be performed of various shapes and can be made from various materials, depending on the use made of the multifunctional tool with interchangeable tips.
- Interchangeable tips are rapidly changed or replaced.
- The multifunctional tool with interchangeable tips can be performed with a resistant, ergonomic design and by using lightweight, ecological and/or recyclable materials.

### Brief Description of the Drawings

A list of the elements shown in the drawings is provided below to make the description more comprehensible:
10.- Handle
11.- Plurality of teeth in the handle (10)
12.- Straight teeth or parallel faces in the plurality of teeth (11)
13.- Cavity in the handle (10); the cavity (13) is a surface whose form is not of revolution.
14.- Mortise or recess in the cavity (13)
15.- Hole in the handle (10)
16.- Rib or reinforcement in the handle (10)
17.- Positioner in the handle (10)
18.- Lateral end of the handle (10)
19.- Upper part of the handle (10)
20.- Cover
21.- Plurality of teeth in the cover (20)
22.- Straight teeth or parallel faces in the plurality of teeth (21)
23.- Cavity in the cover (20); the cavity (23) is a surface whose form is not of revolution
24.- Mortise or recess in the cavity (23)
25.- Hole in the cover (20)
26.- Rib or reinforcement in the cover (20) 28.- Lateral end of the cover (20)
29.- Lower part of the cover (20)
30.- Interchangeable tip
31.- Knocking head or work surface
33.- Diametrical recess in the interchangeable tip (30); the diametrical recess (33) is a surface of revolution
37.- Positioner in the interchangeable tip (30)
38.- Surface of the interchangeable tip (30) formed by the diametrical recess (33)
40.- Removable securing means

To complete the description and help better understand the present invention, a set of drawings is attached in which the following is shown with an illustrative and non-limiting character:
Figure 1 shows an exploded partial perspective view of the multifunctional tool with interchangeable tips.
Figure 2 shows a partial elevational view with a partial section of individual parts of the multifunctional tool with interchangeable tips.
Figure 3 shows a detail view of one way of clamping the interchangeable tip; in this drawing the interchangeable tip is clamped between the cover and the handle at eight points or surfaces of contact.
Figure 4 shows another way of clamping the interchangeable tip; in this drawing the interchangeable tip is clamped between the cover and the handle at six points or surfaces of contact.
Figure 5 shows another way of clamping the interchangeable tip; in this drawing the interchangeable tip is clamped between the cover and the handle at four points or surfaces of contact.
Figure 6 shows a plan view of the multifunctional tool with interchangeable tips; section 7-7 which is shown in Figure 7, can also be seen.
Figure 7 shows a sectioned view of Figure 6 as shown by section 7-7 lines.
Figure 8 shows a partial detail perspective view of the handle.
Figure 9 shows another partial detail perspective view of the handle.
Figure 10 shows a perspective view of the cover.
Figures 11 and 12 show interchangeable tips with different examples of geometries of the diametrical recess of the interchangeable tip.
Figures 13 and 14 show examples of interchangeable tips with different examples of positioners.
Figure 15 shows a perspective view once the multifunctional tool with interchangeable tips is assembled.

### Description of at least one Embodiment of the Invention

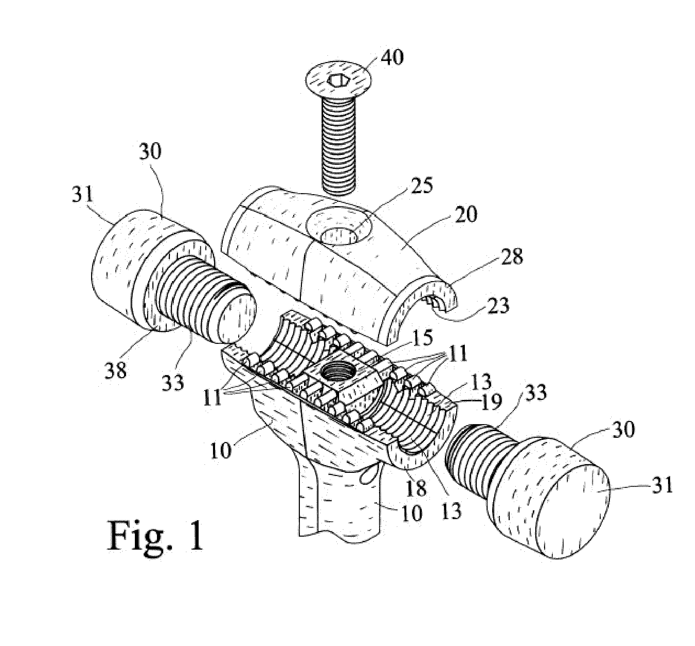

As shown in Figures 1, 2, 7 and 15, the multifunctional tool comprises: a handle (10), a cover (20), at least one interchangeable tip (30), and at least one removable securing means (40).

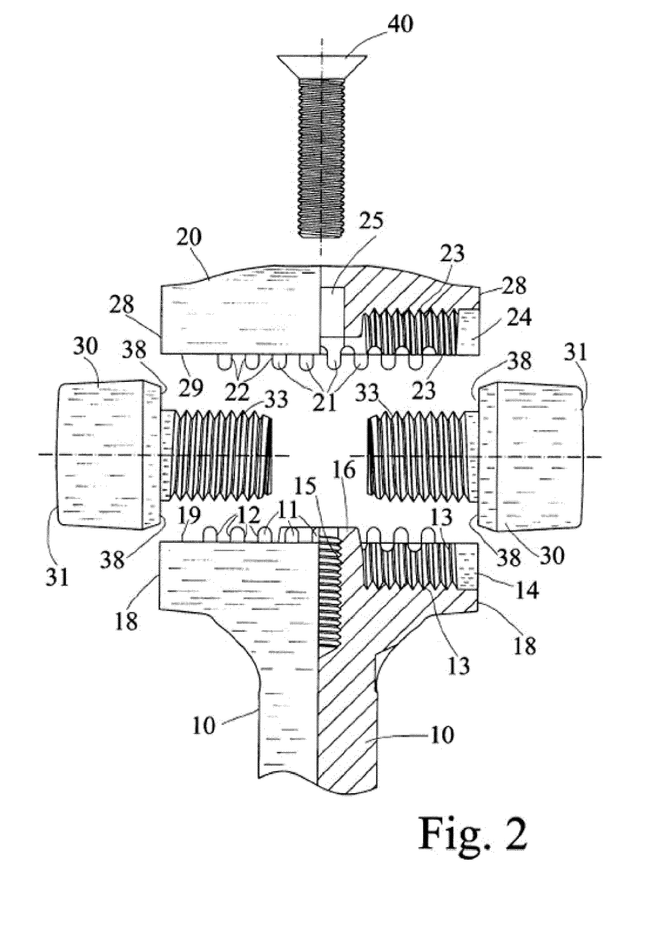

As seen in Figures 2, 7, 8, 9 and 10, the handle (10) and the cover (20) comprise:
- A plurality of teeth (11 and 21) engaging one another by way of tongue and grooving, the teeth (21) of the cover (20) therefore engaging the teeth (11) of the handle (10). The teeth (11 and 21) of the handle (10) and of the cover (20) present at least two faces (12 and 22) parallel to one another such that the teeth (21) of the cover (20) mesh with the teeth (11) of the handle (10) axially with respect to the axis of interchangeable tips (30).
- At least one cavity (13 and 23) comprising surfaces whose form is not of revolution, cavity (13) corresponding to the handle (10) and cavity (23) corresponding to the cover (20). When the cover (20) engages the handle (10), at least one cavity (23) of the cover (20) is aligned with at least one cavity (13) of the handle (10). One or several interchangeable tips (30) are inserted between these cavities (13 and 23).

As seen in Figures 1, 2, 7, 11, 12, 13 and 14, one or several interchangeable tips (30) comprise:
- At least one knocking head or work surface (31).
- A diametrical recess (33) which is inserted between the cavities (13 and 23) of the handle (10) and of the cover (20); the diametrical recess (33) is a surface of revolution.

As seen in Figures 1, 2 and 7, at least one removable securing means (40) secures the cover (20) to the handle (10) and/or vice versa. The diametrical recess (33) of one or several interchangeable tips (30) is therefore clamped at various points or surfaces of contact between the cavities (13 and 23) of the handle (10) and of the cover (20). In this way, the cover (20) and the handle (10) securely clamp at least one interchangeable tip (30).

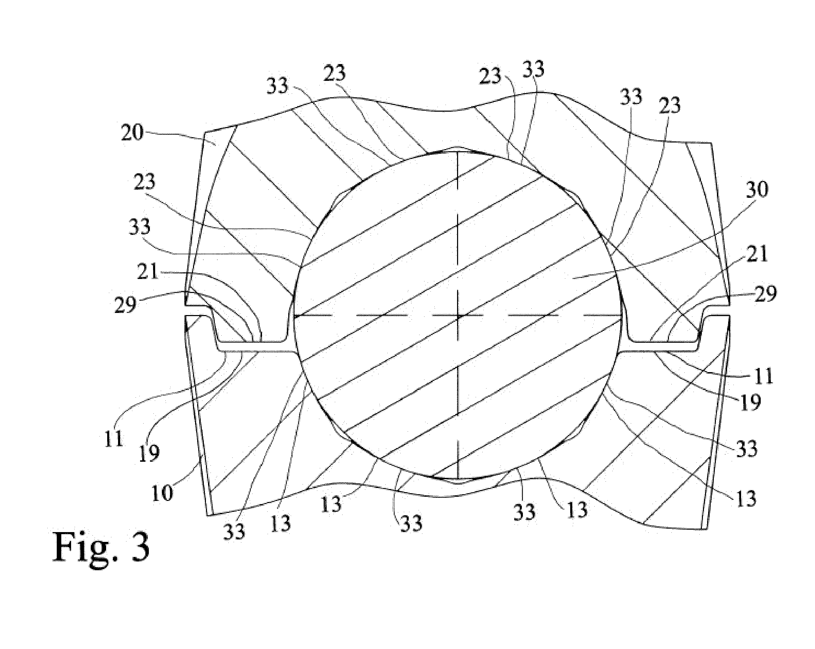

When the cover (20) is secured to the handle (10) by at least one removable securing means (40), the diametrical recess (33) of the interchangeable tip (30) is clamped at various points or surfaces of contact between the cavities (13 and 23) of the handle (10) and of the cover (20), see Figures 3, 4 and 5. The interchangeable tip (30) is thus more rigidly and more firmly secured, thereby reducing the risk of the interchangeable tip (30) coming out. The interchangeable tip (30) is clamped between the cover (20) and the handle (10) at various points or surfaces of contact because:
- the cavities (13 and 23) of the handle (10) and of the cover (20) are surfaces whose forms are not of revolution; and
- the diametrical recess (33) of the interchangeable tip (30) is a surface of revolution.

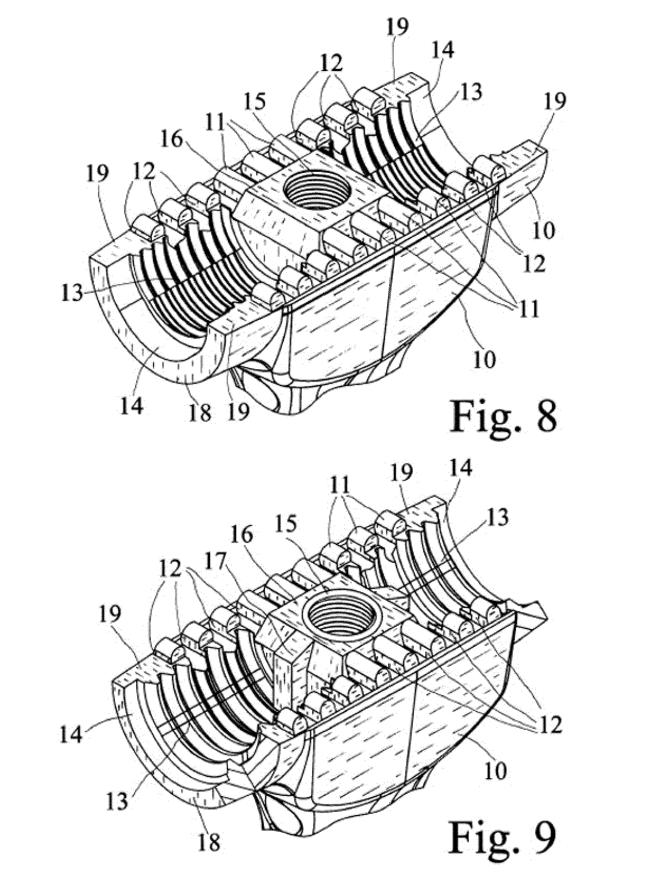

Figures 1, 2, 8, 9 and 10 show the cavities (13 and 23) of the handle (10) and of the cover (20). These cavities (13 and 23) can present:
- a threaded surface (see Figures 1, 2, 8 and 10);
- a surface with at least one groove (see Figure 9); or
- a surface with at least one cavity (not depicted).

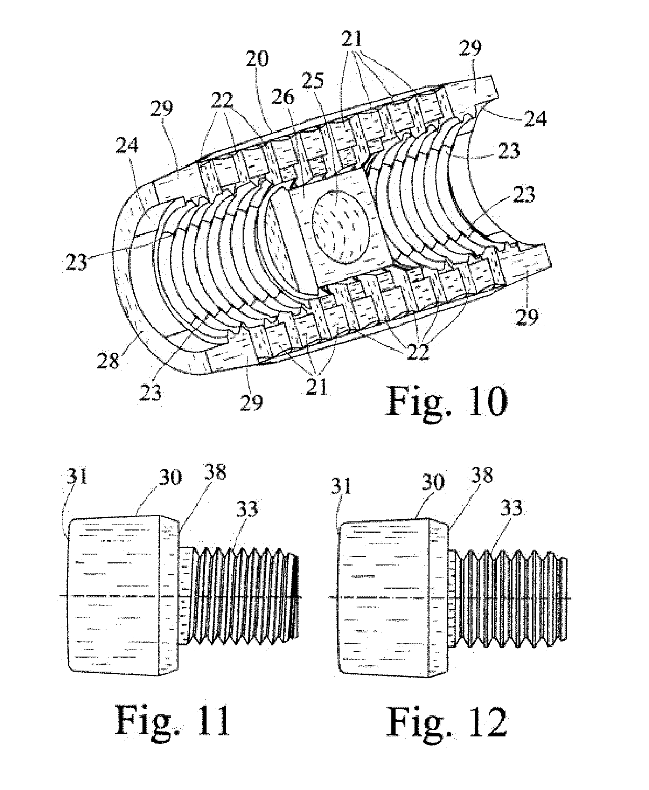

Figures 11, 12, 13 and 14 show several examples of interchangeable tips (30). The diametrical recess (33) of the interchangeable tip (30) can present:
- at least one thread of revolution (see Figure 11);
- at least one grooving or groove of revolution (see Figures 12, 13 and 14); or
- a geometry of revolution (not depicted).

It should be pointed out that the diametrical recess (33) of the interchangeable tip (30) is complementary to the cavities (13 and 23) of the handle (10) and of the cover (20), such that the interchangeable tip (30) is inserted between the handle (10) and the cover (20). Therefore, and by way of example:
- If the diametrical recess (33) of the interchangeable tip (30) presents a threaded surface with a specific pitch and type of thread, the cavities (13 and 23) of the handle (10) and of the cover (20) present a threaded surface with the same pitch and type of thread so that the diametrical recess (33) of the interchangeable tip (30) screws into the cavities (13 and 23) of the handle (10) and of the cover (20).
- The same occurs if the diametrical recess (33) of the interchangeable tip (30) and the cavities (13 and 23) of the handle (10) and of the cover (20) present any other geometry, the diametrical recess (33) therefore engaging the cavities (13 and 23).

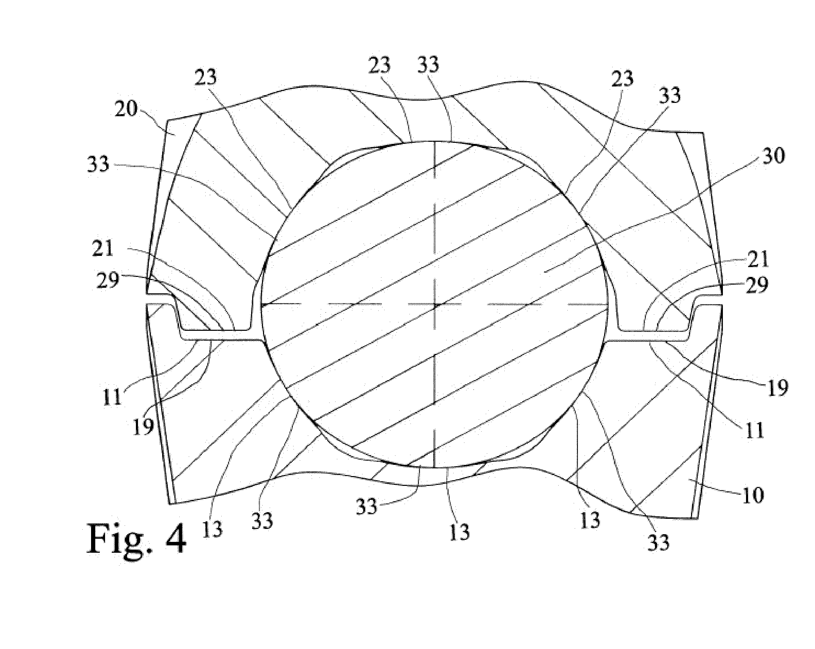

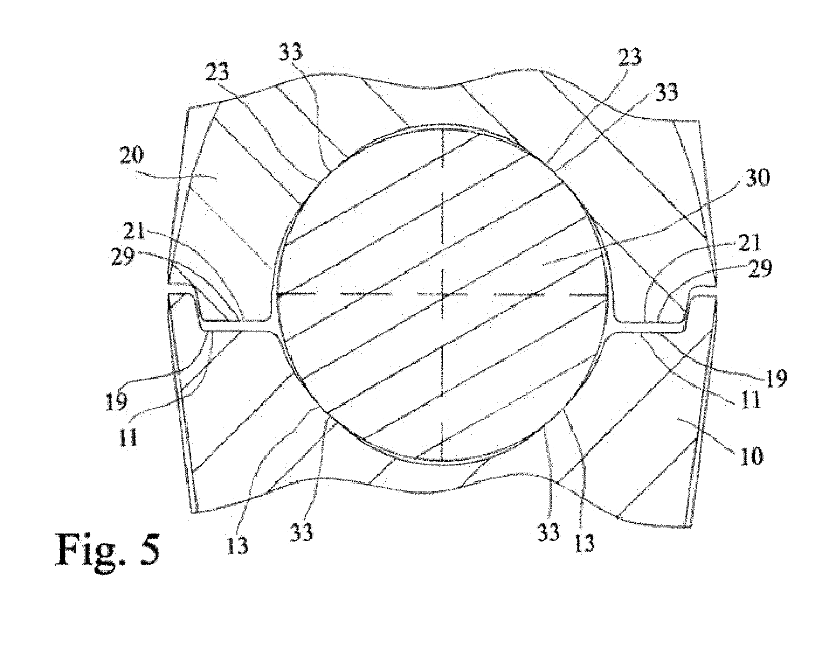

Furthermore, Figures 3, 4 and 5 show different non-limiting examples in which the interchangeable tip (30) is clamped at various points or surfaces of contact between the cover (20) and the handle (10). In that sense, Figure 3 shows eight points or surfaces of contact, Figure 4 shows six points or surfaces of contact, and Figure 5 shows four points or surfaces of contact.

The cavities (13 and 23) of the handle (10) and of the cover (20) are long enough so that the diametrical recess (33) of the interchangeable tip (30) enters said cavities (13 and 23). Furthermore, the diametrical recess (33) preferably presents a length such that it allows seating the interchangeable tip (30) in the handle (10) and in the cover (20); the surface (38) of the interchangeable tip (30) therefore rests or sits at the lateral ends (18 and 28) of the handle (10) and of the cover (20). The diametrical recess (33) of the interchangeable tip (30) thus suffers less and it is more difficult for the interchangeable tip (30) to come loose when hitting or working.

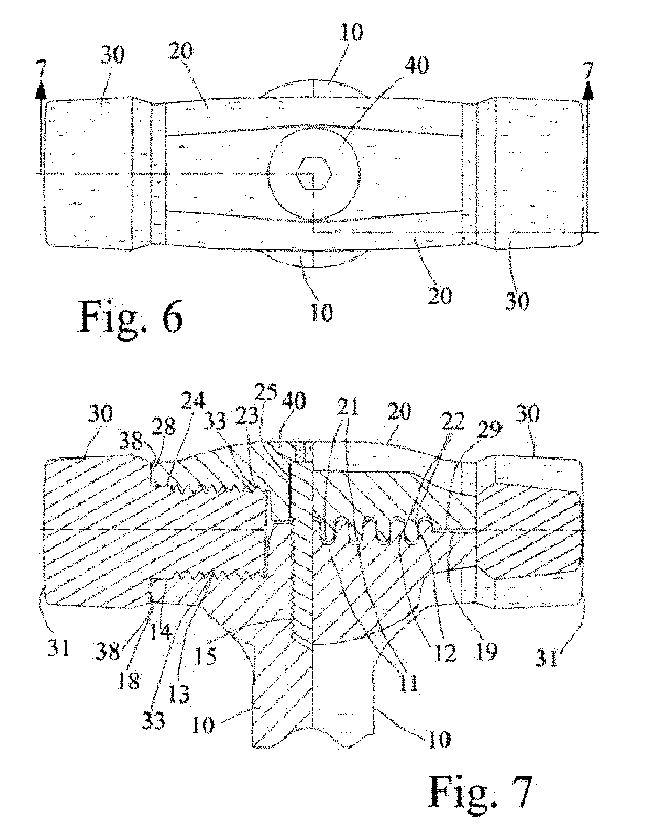

As seen in Figures 2 and 7, the teeth (21 and 11) of the cover (20) and of the handle (10) present at least two faces (22 and 12) parallel to one another, the teeth (21) of the cover (20) therefore meshing with the teeth (11) of the handle (10) axially with respect to the interchangeable tips (30). The teeth (11 and 21) of the handle (10) and of the cover (20) present:
- at least two faces (22 and 12) parallel to one another,
- at least two faces (12 and 22) axially parallel to the removable securing means (40).

The present invention is therefore more rigid and safer because the force of impacts or blows is distributed through each tooth (11 and 21), the parallel faces (12 and 22) of the teeth (11 and 21) further meshing with one another and preventing the cover (20) from sliding and/or being disengaged with respect to the handle (10), making the present invention more rigid and making it more difficult for the interchangeable tips (30) from loosening or coming off.

To improve the securing of the interchangeable tip (30), and once the cover (20) is secured to the handle (10) by at least one removable securing means (40), the cover (20) does not make contact with the handle (10). Therefore, Figure 7 shows how the lower part (29) of the cover (20) does not make contact with the upper part (19) of the handle (10), thereby assuring that the interchangeable tip (30) is clamped at various points or surfaces of contact between the cover (20) and the handle (10).

As seen in Figures 2, 7, 8, 9 and 10, the cavities (13 and 23) of the handle (10) and of the cover (20) can present a mortise or recess (14 and 24). These mortises (14 and 24) can be used as a guide for inserting the interchangeable tip (30), these mortises (14 and 24) further being able to facilitate making the diametrical recess (33) of the interchangeable tip (30). Therefore, and by way of example, if the diametrical recess (33) and the cavities (13 and 23) present a thread or grooves, it can be seen that not the entire length of the diametrical recess (33) needs to be threaded or grooved, see Figures 11 and 12.

The cover (20) and the handle (10) are secured to one another by means of any type of removable attachment, using to that end one or several removable securing means (40). Therefore, and by way of non-limiting examples, the following must be pointed out:
- The handle (10) and the cover (20) present at least one hole (15 and 25), such that at least one hole (15) of the handle (10) coincides with at least one hole (25) of the cover (20) for being able to insert one or several removable securing means (40). Furthermore, at least one hole (15 or 25) of the handle (10) or of the cover (20) can:
   - present a thread where the removable securing means (40) are screwed in or secured. In this case, the removable securing means (40) can be a screw (see Figures 1, 2, 7 and 8);
   - be a threaded insert where the removable securing means (40) are screwed in or secured. In this case, the removable securing means (40) can be a screw (see Figure 9);
   - both be through holes (15 and 25), at least one removable securing means (40) being inserted in said holes (15 and 25) and securing the cover (20) to the handle (10) and/or vice versa. In this case, the removable securing means (40) can be a screw and a nut securing the cover (20) to the handle (10) and/or vice versa. This example is not shown in the attached drawings.
- The handle (10) or the cover (20) presents at least one hole (15 or 25), whereas the cover (20) or the handle (10) presents at least one male threaded insert by way of a threaded bolt; the removable securing means (40) therefore secures the cover (20) to the handle (10) and/or vice versa. In this case, the removable securing means (40) can be a nut. It should be pointed out that if the cover (20) presents at least one hole (25), the handle (10) presents at least one male threaded insert, whereas if the handle (10) presents at least one hole (15), the cover (20) presents at least one male threaded insert. This example is not shown in the attached drawings.

As seen in Figures 8, 9 and 10, the handle (10) and/or cover (20) can further present at least one rib or reinforcement (16 and/or 26). This rib (16 and/or 26) can make the multifunctional tool with interchangeable tips more rigid. The rib (16 and 26) is shown in the attached drawings, although the handle (10) and/or the cover (20) can be provided without said ribs (16 and/or 26).

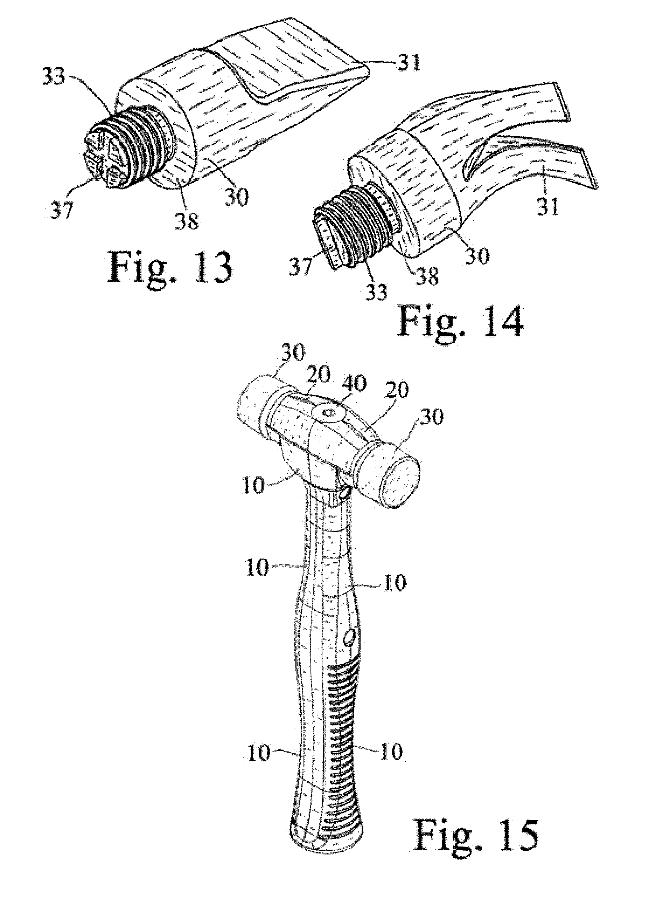

The interchangeable tip (30), handle (10) and/or cover (20) can further be presented with a positioner (37 and 17) that allows positioning the interchangeable tip (30) with respect to the handle (10). In Figure 9, the handle (10) is presented with the positioner (17), whereas in Figures 13 and 14 it can be seen that the interchangeable tip (30) is provided with the positioner (37). In Figure 9, the positioner (17) of the handle (10) is depicted by means of a projection, whereas in Figure 13 the positioner (37) of the interchangeable tip (30) is depicted by means of recesses or channels, and in Figure 14 the positioner (37) of the interchangeable tip (30) is depicted by means of a projection. It should be pointed out that the positioners can be made in any way that allows positioning the interchangeable tip (30) with respect to the handle (10) and/or the cover (20). On the other hand, as occurs with the handle (10), the cover (20) can be presented with a positioner; the positioner of the cover (20) is not shown in the drawings.

The handle (10) can further be provided with a grip or a geometry such that it is easier, more practical or more ergonomic for gripping the multifunctional tool with interchangeable tips.

To improve safety, the handle (10) is integral, i.e., made in one-piece, so it is difficult for the handle to come off unless it breaks. The multifunctional tool with interchangeable tips is therefore safer, and accordingly is also made safer for the end user.

The interchangeable tip (30) can be made from any material or combination of materials suitable for the different applications or uses of the multifunctional tool with interchangeable tips. Furthermore, the knocking head or work surface (31) can present any shape to enable performing different jobs.

The handle (10) and the cover (20) can be made from any material that is rigid and durable enough so as to not easily break or crack.

The arrangement of the cover (20) with respect to the handle (10) can be vertical, lateral or any other type of arrangement that allows correct assembly and securing.

The attached drawings show a single removable securing means (40), although there can be several removable securing means (40). Furthermore, the attached drawings depict the removable securing means (40) by means of a screw, although it can be any other known removable securing means. Furthermore, at least one washer can be incorporated in at least one removable securing means (40); the washer is not shown in the attached drawings.

The multifunctional tool with interchangeable tips can be used as a: hammer, stick, axe, pickaxe, mallet, hoe, Dutch-hoe, mattock, gardening tool, masonry tool, and/or any hand tool used for hitting, extracting nails, cutting, chipping, chiseling, scratching, scraping or digging.

## Claims

1. A multifunctional tool with interchangeable tips, the multifunctional tool comprising:
- a handle (10),
- a cover (20),
- at least one interchangeable tip (30), and
- at least one removable securing means (40);
**characterized in that**
said handle (10) and said cover (20) comprise:
- a plurality of teeth (11 and 21) engaging one another by way of tongue and grooving, said pluralities of teeth (11 and 21) having at least two faces (12 and 22) parallel to one another such that the plurality of teeth (11) of the handle (10) mesh with the plurality of teeth (21) of the cover (20) axially with respect to the axis of interchangeable tips (30); and
- at least one cavity (13 and 23) comprising surfaces whose form is not of revolution; such that the cover (20) is adapted to engage the handle (10), at least one cavity (13) of the handle (10) being aligned with at least one cavity (23) of the cover (20); at least one interchangeable tip (30) being able to be inserted between said cavities (13 and 23);
one or several interchangeable tips (30) each comprising:
- at least one knocking head or work surface (31); and
- a diametrical recess (33) which is a surface of revolution, the diametrical recess (33) of the interchangeable tip (30) adapted to be inserted between the cavity (13) of the handle (10) and the cavity (23) of the cover (20);
wherein at least one removable securing means (40) is adapted to secure the cover (20) to the handle (10) and/or vice versa, said diametrical recess (33) of at least one interchangeable tip (30) being clamped at various points or surfaces of contact between the cavities (13 and 23) of the handle (10) and of the cover (20), such that the cover (20) and handle (10) securely clamp to at least one interchangeable tip (30).

2. The multifunctional tool according to claim 1, **characterized in that** the plurality of teeth (11 and 21) of the handle (10) and of the cover (20) are adapted to distribute the force of the impacts or blows through each tooth.

3. The multifunctional tool according to claim 1, **characterized in that** the parallel faces (12 and 22) of the plurality of teeth (11 and 21) further comprise at least two faces axially parallel to one or more removable securing means (40).

4. The multifunctional tool according to claim 1 or 3, **characterized in that** the plurality of teeth (11 and 21) of the handle (10) and of the cover (20) mesh with one another axially with respect to the axis of the interchangeable tip (30), preventing the cover (20) from sliding off or being disengaged from the handle (10).

5. The multifunctional tool according to claim 1, **characterized in that** the diametrical recess (33) of the interchangeable tip (30) and the cavities (13 and 23) of the handle (10) and of the cover (20) comprise a threaded surface, wherein:
- the cavities (13 and 23) of the handle (10) and of the cover (20) are a threaded surface whose form is not of revolution; and
- the diametrical recess (33) of the interchangeable tip (30) is a threaded surface of revolution;
the diametrical recess (33) is therefore complementary to the cavities (13 and 23) such that the diametrical recess (33) of the interchangeable tip (30) is adapted to be screwed into the cavities (13 and 23) of the handle (10) and of the cover (20); the cavities (13 and 23) of the handle (10) and of the cover (20) are adapted to clamp the diametrical recess (33) of at least one interchangeable tip (30) at various points or surfaces of contact.

6. The multifunctional tool according to claim 1, **characterized in that** the diametrical recess (33) of the interchangeable tip (30) and the cavities (13 and 23) of the handle (10) and of the cover (20) comprise a surface with at least one groove, wherein:
- the cavities (13 and 23) of the handle (10) and of the cover (20) are a surface with at least one groove whose form is not of revolution; and
- the diametrical recess (33) of the interchangeable tip (30) is a surface with at least one groove of revolution or grooving;
the diametrical recess (33) is therefore complementary to the cavities (13 and 23) such that the diametrical recess (33) of the interchangeable tip (30) is adapted to be inserted between the cavities (13 and 23) of the handle (10) and of the cover (20); the cavities (13 and 23) of the handle (10) and of the cover (20) are adapted to clamp the diametrical recess (33) of at least one interchangeable tip (30) at various points or surfaces of contact.

7. The multifunctional tool according to claim 1, **characterized in that** the diametrical recess (33) of the interchangeable tip (30) and the cavities (13 and 23) of the handle (10) and of the cover (20) comprise a complementary surface by way of tongue and grooving, wherein:
- the cavities (13 and 23) of the handle (10) and of the cover (20) are a surface with at least one cavity whose form is not of revolution; and
- the diametrical recess (33) of the interchangeable tip (30) is a surface with any geometry of revolution;
the diametrical recess (33) is therefore complementary to the cavities (13 and 23) such that the diametrical recess (33) of the interchangeable tip (30) is inserted between the cavities (13 and 23) of the handle (10) and of the cover (20); the cavities (13 and 23) of the handle (10) and of the cover (20) are adapted to clamp the diametrical recess (33) of at least one interchangeable tip (30) at various points or surfaces of contact.

8. The multifunctional tool according to claim 1, **characterized in that** said handle (10) and said cover (20) further comprise at least one hole or cavity (15 and 25) each coinciding with one another, wherein at least one removable securing means (40) is inserted in said holes (15 and 25) and secures the cover (20) to the handle (10) and/or vice versa.

9. The multifunctional tool according to claim 8, **characterized in that** at least one hole (15) of the handle (10) comprises a thread, said thread being adapted so that at least one removable securing means (40) is secured or screwed therein for fixing the cover (20) to the handle (10) and/or vice versa.

10. The multifunctional tool according to claim 1, **characterized in that** the handle (10) and/or the cover (20) further comprise at least one rib or reinforcement (16, 26).

11. The multifunctional tool according to claim 1, **characterized in that** at least one interchangeable tip (30), the handle (10) and/or the cover (20) further comprise at least one positioner (37 and 17) that allows positioning at least one interchangeable tip (30) with respect to the handle (10).

12. The multifunctional tool according to claim 1 or 9, **characterized in that** the removable securing means (40) is a screw.

13. The multifunctional tool according to claim 1, **characterized in that** the handle (10) is integral.

14. The multifunctional tool according to claim 1, **characterized in that** the handle (10) additionally comprises a grip.
